# EUROPEAN PATENT SPECIFICATION

(11) **EP 0 859 014 B1**
(45) Date of publication and mention of the grant of the patent: **28.08.2002**
(21) Application number: 98101939.1
(22) Date of filing: 05.02.1998
(51) Int. Cl.: C08F 4/02, C08F 4/636, C08F 10/00

(54) **Carrier for olefin polymerization catalysts**
Träger für Olefinpolymerisationskatalysatoren
Support pour catalyseurs de polymérisation d'oléfine

(30) Priority: 17.02.1997 EP 97102500
(43) Date of publication of application: 19.08.1998
(73) Proprietor: Borealis GmbH, 2323 Schwechat-Mannswörth (AT)
(72) Inventor: Luciani, Luciano, Dr., 44100 Ferrara (IT); Neissl, Wolfgang, Dipl.-Ing. Dr., 4040 Lichtenberg (AT); Hafner, Norbert, Dipl.-Ing. Dr., 4020 Linz (AT)
(74) Representative: VA TECH Patente GmbH & Co

(56) References cited:
- No relevant documents disclosed

## Description

The present invention relates to a procedure for producing a carrier (or support) to be used for the preparation of catalysts for polymerizing α-olefins alone or in mixture.

α-olefins such as ethylene, propylene and higher olefin monomers can be polymerized by using Ziegler-Natta-catalysts based on a combination of organometallic compounds of elements of groups IA to IIIA and a compound of a transition metal belonging to groups IVB to VIB of the periodic table (e.g. in Boor Jr, Ziegler-Natta-Catalysts and Polymerization, Academic Press, New York, 1979).

To improve the morphology of the resin, it is moreover known to impregnate a granular solid of microspheroidal carrier with the catalyst (Karol F.J., Cat. Rev. Sci. Eng. 26, 384, 557 - 595, 1984). Among others, silica can be used as a catalyst carrier for α-olefin polymerization.

It is important to use an appropriate selective carrier for the preparation of α-olefin catalyst preparation, which can be impregnated with the active part of the catalysts, thereby enhancing the properties.

Various proposals have been made in the art for preparing a carrier and subsequently a catalyst for olefin polymerization. From EP-application 96118559, a catalyst for the polymerization of olefins is known, which is prepared by impregnating a silica with a Mg-halide and a Mg-alkyl, halogenating and then impregnating with a Ti-tetrahalide.

According to US-Patent 5.310.716, a non preactivated silica (containing hydroxyl groups and water) is treated with Mg-alkyl and then (after removing the liquid, washing and drying) with tetrachlorosilane, whereby a carrier is obtained. After this step, a treatment with an excess of Ti-tetrachloride and donor is carried out.

According to US 5.006.620 a silica is treated with Mg-alkyl, then with chlorine or hydrochloric acid and with a C₁₋₈-alkanol for attaining a carrier, which is subsequently treated with an excess of Ti-tetrachloride and donor for achieving a catalyst.

According to US-Patent 4.639.430, a silica is impregnated with Mg-chloride (dissolved in water), dried, mixed with NH₄Cl and treated at high temperature, whereby a carrier with a minimum content of hydroxyl groups is obtained. This support is then impregnated with heptane, containing a very small amount of Ti-tetrachloride for attaining a catalyst for the preparation of polyethylene or for ethylene-propylene rubbers.

In the field of catalyst research it is still strongly desirable to find new catalyst components or catalyst systems with improved performance, especially with high activity and/or high stereoregularity.

According to the present invention, it has now been found that a silica, which does not contain free water, but different amounts of hydroxylgroups, can be treated with a solution of Mg-chloride in the presence of electron donors and with a solution of Mg-alkyls dissolved in Si-tetrachloride at low temperature and subsequently heating to reflux temperature, whereby Mg-chloride is precipitated.

The present invention accordingly provides a procedure for the preparation of a solid carrier for olefin polymerization catalysts, comprising the steps:
a) impregnating a silica with a solution of Mg-chloride in the presence of electron donors,
b) drying the impregnated silica obtained in (a) and impregnating it with a solution of Mg-alkyls in SiCl₄ at a temperature from -10 to 20 °C, optionally adding a further amount of electron donors,
c) subsequently treating the slurry obtained in (b) at a temperature from 40 °C to reflux temperature,
d) drying the carrier obtained in (c).

We have moreover found that by treating this carrier (or support) with Ti-tetrachloride or a mixture of Ti-tetrachloride and Ti-alkoxide, highly active catalysts for stereoregular polypropylenes and for polyethylene, including their copolymers, are obtained.

The silica suitable for the support is preferably a spheroidal, porous silica with a particle size of 15 to 150 micron, with a surface area of 100 to 500 m²/g, a pore volume of 1,2 to 3 ml/g and an average pore diameter of 20 to 500 angstrom. The silica has preferably a content of hydroxyl groups of 0 to 5 mmol/g, most preferred of 0,1 to 3 mmol/g.

The preferred solvent for Mg-chloride is an ester like e.g. ethyl formiate, ethyl acetate, ethyl propionate, isopropyl acetate, isopropyl propionate or ethyl carbonate. Preferred esters are ethyl formiate, ethyl acetate, ethyl propionate, isopropyl acetate, isopropyl propionate.

According to the invention, it is further preferred that the silica obtained after the impregnation step (a) contains less than 6 % wt of Mg, referred to the final carrier, and that the carrier obtained in step (d) contains 2 to 10 % wt, preferably 5 to 8 % wt of Mg, referred to the final carrier.

In step (a) of the invention, the silica is directly impregnated with Mg-chloride, whereas an additional amount of Mg-chloride is brought into the silica by the reaction of Mg-alkyl and SiCl₄, which are added in step (b) and which react mainly at the higher temperature in step (c), whereby said additional Mg-chloride is precipitated. The weight ratio of Mg-chloride from step (a): Mg-chloride from steps (b/c) is preferably in the range of 0.1 : 1 to 10 : 1, more preferred between 0.2 : 1 to 5 : 1 and most preferred between 0.5 : 1 to 2 : 1.
Further preferred is a molar ratio of Mg-alkyl : SiCl₄ from 1 : 5 to 1 : 30.
Phthalic acid esters are preferred as donors, whereby the most preferred donor is diisobutylphthalate (DIBP). The donors are preferably used in an amount of 20 to 100 % wt, referred to the silica, but it is also possible to use higher amounts of donors.

The Mg-alkyls used in step (b) are preferably Mg-alkyls with 1 to 10 C-atoms in the alkyl group. Most preferred are Mg-diethyl, Mg-ethylbutyl, Mg-dihexyl and Mg-butyloctyl.

According to the present invention, the procedure will preferably comprise the following steps:

In the first step of the invention, the silica is suspended in a solution of Mg-chloride in ethylacetate (EA) in the presence of DIBP, the amount of DIBP being 20 to 100 % wt, preferably 60 % wt, referred to the silica. The impregnation of the silica with Mg-chloride dissolved in EA can be carried out in one or more steps. Ethylformiate, ethylpropionate, isopropylacetate or isopropylpropionate can also be used as a solvent. The amount of Mg to be impregnated in the form of Mg-chloride is 1 to 6 % wt, preferably 4 % wt, referred to the final carrier.

The above slurry is then heated for 2 h at reflux under stirring, and then EA is distilled off.
The dried carrier is subsequently submitted to another impregnation step, using a solution of Mg-alkyl in Si-tetrachloride. As Mg-alkyl, Mg-diethyl, Mg-ethylbutyl, Mg-butyloctyl or Mg-dihexyl may be used. The amount of Mg to be impregnated in this step in the form of e.g. Mg-dihexyl, which is then converted to Mg-chloride at higher temperatures, is 1 to 9 % wt, preferably 1 to 4 % wt, referred to the final carrier.
After 2 h stirring at about 0°C, the temperature is increased to reflux and maintained for 2 h at this value, whereby Mg-chloride is precipitated in disordered active form into the pores of the silica. At this step the diluent is removed and after drying the carrier is ready to be used for catalyst preparation.

The invention further concerns a procedure for the preparation of a supported catalyst for the polymerization of α-olefins, wherein a carrier (or support) obtained according to the invention, is contacted with a transition metal halide of group IVb, Vb or VIb of the periodic table, and optionally with electron donors. Preferably Ti-tetrachloride is used as the transition metal halide, optionally in the presence of a Ti-alkoxyde. The Ti-tetrachloride may be used undiluted or as a solution in organic solvents, e.g. in toluene or ethylbenzene.

The supported catalyst as described above can be advantageously used in bulk, slurry or gas phase processes for the preparation of polyolefins by homopolymerization or copolymerization with two or more monomers. The catalyst can be used also in the polymerization of ethylene as it is or omitting internal and external donors.

The present invention further relates to a process for the preparation of polyolefins by homopolymerization or copolymerization of olefins, wherein a supported catalyst as described above is used. The polymerization is conducted according to conventional methods, operating in a liquid phase, either in the presence or in the absence of an inert hydrocarbon diluent, or in gas phase.

The catalyst of the invention can be used also at higher temperatures, whereby the polymerization is preferably carried out at a temperature of about 20° to 150°C, more preferred between 70°C and 120°C, at atmospheric pressure or at a higher pressure, in absence or in presence of hydrogen.

The catalyst of the present invention shows an improved performance, and is also permitting to achieve very low values of extractable amorphous resins in boiling n-heptane and xylene.

Many other α-olefins can also be polymerized using this catalyst, like butene-1, 4-methyl-1-pentene, hexene-1, alone or in mixture with other α-olefins for obtaining copolymers and terpolymers, mainly of rubber type.

The use of this catalyst permits moreover to obtain controlled polymer particle size of the desired dimension on the basis of the choice of the selected silica.

### Example 1:

### Carrier preparation:

20 g microspheroidal silica, treated at 740°C (resulting in 1,12 mmol/g of OH-groups), with a surface area of 150 - 300 m²/g, pore volume of 1,58 ml/g and an average particle sice of 75 micron, are charged in nitrogen atmosphere into a 500 ml flask, equipped with a reflux cooler, stirrer and thermometer, containing a solution of 4,5 Mg-chloride dissolved in 300 ml ethylacetate and 10 ml diisobutylphthalate.
The slurry is treated at reflux for 2 h under stirring and then distilled at 90°C without vacuum. Then the resulting white powder is dried under vacuum at 90°C for 1 h.
This powder is added under nitrogen to a solution of 20 g Mg-(hexyl)2 (diluted in a hydrocarbon : 20 % wt in heptane) in 100 ml Si-tetrachloride at 2°C and stirred for 2 h.
Then the temperature is increased to the reflux, and the slurry is stirred for 2 h to precipitate Mg-chloride in disordered active form. After adding 10 ml diisobutylphthalate and 20 ml n-heptane, stirring was continued for 1 h at reflux.
After washing with 300 ml n-heptane for two times and with 300 ml n-pentane for two times (all washings at room temperature) and drying, the carrier is ready to be used to prepare a catalyst usable for polymerization or copolymerization of ethylene, propylene and other alpha-olefines.

### Catalyst preparation:

The carrier, obtained as described, is treated at 110°C with 120 ml Ti-tetrachloride for 1,5 h. After filtering at 110°C, the treatment with Ti-tetrachloride at 110°C is carried out again twice. After final-filtration at 110°C, the solid material is washed 5 times with 300 ml of n-heptane at 95°C for 0,5 h each time. After two washing treatments with 300 ml n-pentane at room temperature, the catalyst is dried. 53,08 g of a brown powder were obtained, containing 4,05 % wt Ti, 5,49 % wt Mg and 31,8 % wt Cl.

### Polymerization:

The activity and stereospecifity of this solid catalyst component were determined in runs of propylene polymerization in liquid monomer, using aluminiumtrialkyls treated with electron-donor compounds as a cocatalyst:

A 5l-autoclave equipped with a magnetic stirrer was filled with 1327 g propylene and 10I H₂, which was used as a molecular weight modifier.
About 24 mg of solid catalyst component were mixed with a complex of triethylaluminium/dicyclopentyldimethoxysilane (20:1 mol/mol) in a ratio of 100:1 (mol Al/mol. Ti) and introduced into the autoclave. After heating to 70 °C, the polymerization was running for two hours and then the remaining propylene was flashed off. The polymer was stabilized and dried at 50 °C under vacuum.
A yield equal to 12,9 kg PP per g of solid catalyst component and equal to 319 kg PP per g of Ti was achieved with the following characteristics:
- MFI (2,16 kg; 230 °C ASTM D 1238 L) =: 7,4
- Bulk density (g/ml) =: 0,423
- Isotactic index (%) =: 98,0
- Xylene cold solubles (% wt) =: 0,98

## Claims

1. Procedure for the preparation of a solid carrier for olefin polymerization catalysts, comprising the steps:
a) impregnating a silica with a solution of Mg-chloride in the presence of electron donors,
b) drying the impregnated silica obtained in (a) and impregnating it with a solution of Mg-alkyls in SiCl₄ at a temperature from -10 to 20 °C, optionally adding a further amount of electron donors,
c) subsequently treating the slurry obtained in (b) at a temperature from 40 °C to reflux temperature,
d) drying the carrier obtained in (c).

2. Procedure according to claim 1, wherein an ester is used as a solvent for Mg-chloride.

3. Procedure according to claim 2,wherein the solvent for Mg-chloride is ethyl formiate, ethyl acetate, ethyl propionate, isopropyl acetate or isopropyl propionate.

4. Procedure according to any of claims 1 to 3, wherein the silica obtained after the impregnation step (a) contains less than 6 % wt of Mg, referred to the final carrier.

5. Procedure according to any of claims 1 to 4, wherein the carrier obtained in step (d) contains 2 to 10 % wt, preferably 5 to 8 % wt of Mg, referred to the final carrier.

6. Procedure according to any of claims 1 to 5, wherein the silica has a content of OH-groups of 0 to 5 mM/g.

7. Procedure according to any of claims 1 to 6, wherein the silica is spheroidal and porous without a content of free water, and having an average particle size of 15 to 150 micron, a surface area of 100 to 500 m²/g, a pore volume of 1.2 to 3 ml/g and an average pore diameter of 20 to 500 angstrom.

8. Procedure according to any of claims 1 to 7, wherein the molar ratio of Mg-alkyl: SiCl₄ is from 1 : 5 to 1 : 30.

9. Procedure according to any of claims 1 to 8, wherein phthalic acid esters are used as donors.

10. Procedure according to claim 9. wherein diisobutylphthalate is used as the donor.

11. Procedure according to any of claims 1 to 10, wherein the donor is used in an amount of 20 to 100 % wt, referred to the silica.

12. Procedure according to any of claims 1 to 11, wherein the Mg-alkyl is a Mg-diethyl, Mg-ethylbutyl, Mg-dihexyl or Mg-butyloctyl.

13. Procedure for the preparation of a supported catalyst for the polymerization of α-olefins, wherein a carrier (or support) obtained according to any of claims 1 to 12, is contacted with a transition metal halide of group IVb, Vb or VIb of the periodic table, and optionally with electron donors.

14. Process for the preparation of polyolefins by homopolymerization or copolymerization of olefins, wherein a supported catalyst according to claim 13 is used.

## Patentansprüche

1. Verfahren zur Herstellung eines festen Trägers für Olefinpolymerisationskatalysatoren, bei dem man:
a) ein Siliciumdioxid mit einer Lösung von Magnesiumchlorid in Gegenwart von Elektronendonatoren imprägniert,
b) das in (a) erhaltene imprägnierte Siliciumdioxid trocknet und bei einer Temperatur von -10 bis 20°C mit einer Lösung von Magnesiumalkylen in SiCl₄ imprägniert, gegebenenfalls unter Zusatz einer weiteren Elektronendonatorenmenge,
c) anschließend die in Schritt (b) erhaltene Aufschlämmung bei einer Temperatur von 40°C bis Rückflußtemperatur behandelt und
d) den in (c) erhaltenen Träger trocknet.

2. Verfahren nach Anspruch 1, bei dem man als Lösungsmittel für Magnesiumchlorid einen Ester einsetzt.

3. Verfahren nach Anspruch 2, bei dem man als Lösungsmittel für Magnesiumchlorid Ameisensäureethylester, Essigsäureethylester, Propionsäureethylester, Essigsäureisopropylester oder Propionsäureisopropylester einsetzt.

4. Verfahren nach einem der Ansprüche 1 bis 3, bei dem das nach dem Imprägnierschritt (a) erhaltene Siliciumdioxid weniger als 6 Gew.-% Mg, bezogen auf den fertigen Träger, enthält.

5. Verfahren nach einem der Ansprüche 1 bis 4, bei dem der in Schritt (d) erhaltene Träger 2 bis 10 Gew.-%, vorzugsweise 5 bis 8 Gew.-%, Mg, bezogen auf den fertigen Träger, enthält.

6. Verfahren nach einem der Ansprüche 1 bis 5, bei dem das Siliciumdioxid einen OH-Gruppen-Gehalt von 0 bis 5 mM/g aufweist.

7. Verfahren nach einem der Ansprüche 1 bis 6, bei dem das Siliciumdioxid kugelförmig und porös ist, kein freies Wasser enthält, eine durchschnittliche Teilchengröße von 15 bis 150 Mikron, eine Oberfläche von 100 bis 500 m²/g, ein Porenvolumen von 1,2 bis 3 ml/g und einen durchschnittlichen Porendurchmesser von 20 bis 500 Angström aufweist.

8. Verfahren nach einem der Ansprüche 1 bis 7, bei dem das Magnesiumalkyl/SiCl₄-Molverhältnis 1:5 bis 1:30 beträgt.

9. Verfahren nach einem der Ansprüche 1 bis 8, bei dem man als Donatoren Phthalsäureester einsetzt.

10. Verfahren nach Anspruch 9, bei dem man als Donator Diisobutylphthalat einsetzt.

11. Verfahren nach einem der Ansprüche 1 bis 10, bei dem man den Donator in einer Menge von 20 bis 100 Gew.-%, bezogen auf das Siliciumdioxid, einsetzt.

12. Verfahren nach einem der Ansprüche 1 bis 11, bei dem man als Magnesiumalkyl Diethylmagnesium, Ethylbutylmagnesium, Dihexylmagnesium oder Butyloctylmagnesium einsetzt.

13. Verfahren zur Herstellung eines Trägerkatalyators für die Polymerisation von α-Olefinen, bei dem man einen nach einem der Ansprüche 1 bis 12 erhaltenen Träger mit einem Übergangsmetallhalogenid der Gruppe IVb, Vb oder VIb des Periodensystems und gegebenenfalls mit Elektronendonatoren in Berührung bringt.

14. Verfahren zur Herstellung von Polyolefinen durch Homopolymerisation oder Copolymerisation von Olefinen, bei dem man einen Trägerkatalysator nach Anspruch 13 einsetzt.

## Revendications

1. Procédé de préparation d'un support solide pour des catalyseurs de polymérisation d'oléfines, comprenant les étapes consistant à :
a) imprégner une silice d'une solution de chlorure de magnésium en présence de donneurs d'électrons,
b) sécher la silice imprégnée obtenue en (a) et l'imprégner d'une solution de Mg-alkyles dans du SiCl₄ à une température de -10 à 20°C, en ajoutant éventuellement une quantité supplémentaire de donneurs d'électrons,
c) traiter ensuite la bouillie obtenue en (b) à une température de 40°C à la température de reflux,
d) sécher le support obtenu en (c).

2. Procédé selon la revendication 1, dans lequel un ester est utilisé en tant que solvant pour le chlorure de magnésium.

3. Procédé selon la revendication 2, dans lequel le solvant pour le chlorure de magnésium est le formiate d'éthyle, l'acétate d'éthyle, le propionate d'éthyle, l'acétate d'isopropyle ou le propionate d'isopropyle.

4. Procédé selon l'une quelconque des revendications 1 à 3, dans lequel la silice obtenue après l'étape d'imprégnation (a) contient moins de 6 % en poids de magnésium, par rapport au support final.

5. Procédé selon l'une quelconque des revendications 1 à 4, dans lequel le support obtenu dans l'étape (d) contient de 2 à 10 % en poids, de préférence de 5 à 8 % en poids de magnésium, par rapport au support final.

6. Procédé selon l'une quelconque des revendications 1 à 5, dans lequel la silice présente une teneur en groupes OH de 0 à 5 mM/g.

7. Procédé selon l'une quelconque des revendications 1 à 6, dans lequel la silice est sphéroïdale et poreuse sans teneur en eau libre, et présentant une taille de particule moyenne de 15 à 150 microns, une surface spécifique de 100 à 500 m²/g, un volume de pores de 1,2 à 3 ml/g et un diamètre de pore moyen de 20 à 500 angströms.

8. Procédé selon l'une quelconque des revendications 1 à 7, dans lequel le rapport molaire de Mg-alkyle:SiCl₄ est de 1:5 à 1:30.

9. Procédé selon l'une quelconque des revendications 1 à 8, dans lequel des esters de l'acide phtalique sont utilisés en tant que donneurs.

10. Procédé selon la revendication 9, dans lequel le phtalate de diisobutyle est utilisé en tant que donneur.

11. Procédé selon l'une quelconque des revendications 1 à 10, dans lequel le donneur est utilisé en une quantité de 20 à 100 % en poids, par rapport à la silice.

12. Procédé selon l'une quelconque des revendications 1 à 11, dans lequel le Mg-alkyle est un Mg-diéthyle, un Mg-éthylbutyle, un Mg-dihexyle ou un Mg-butyloctyle.

13. Procédé de préparation d'un catalyseur supporté pour la polymérisation d'α-oléfines, dans lequel un support (ou vecteur) obtenu selon l'une quelconque des revendications 1 à 12, est mis en contact avec un halogénure de métal de transition du groupe IVb, Vb ou VIb du tableau périodique, et éventuellement avec des donneurs d'électrons.

14. Procédé de préparation de polyoléfines par homopolymérisation ou copolymérisation d'oléfines, dans lequel un catalyseur supporté selon la revendication 13 est utilisé.
